# EUROPÄISCHE PATENTSCHRIFT

(11) **EP 3 916 160 B1**
(45) Veröffentlichungstag und Bekanntmachung des Hinweises auf die Patenterteilung: **16.08.2023**
(21) Anmeldenummer: 20176471.9
(22) Anmeldetag: 26.05.2020
(51) Int. Cl.: E02F 3/96, E02F 9/20

(54) **VERFAHREN UND ANORDNUNG ZUM DURCHFÜHREN VON BAUMASSNAHMEN**
METHOD AND ASSEMBLY FOR CARRYING OUT CONSTRUCTION MEASURES
PROCÉDÉ ET AGENCEMENT DE MISE EN UVRE DES MESURES DE CONSTRUCTION

(43) Veröffentlichungstag der Anmeldung: 01.12.2021
(73) Patentinhaber: BAUER Spezialtiefbau GmbH, 86529 Schrobenhausen (DE)
(72) Erfinder: SEMEL, Matthias, 85276 Pfaffenhofen an der Ilm (DE); SCHOBER, Andreas, 86637 Wertingen (DE)
(74) Vertreter: Wunderlich & Heim Patentanwälte Partnerschaftsgesellschaft mbB

(56) Entgegenhaltungen:
- WO-A1-2016/115499

## Beschreibung

Die Erfindung betrifft ein Verfahren zum Durchführen von Baumaßnahmen, insbesondere Tiefbaumaßnahmen, auf einer Baustelle mit einer Anzahl von n von Baumaschinen, insbesondere Tiefbaumaschinen, an welchen Anbaukomponenten, insbesondere Bauwerkzeuge, lösbar und wechselnd angebracht werden, wobei eine Anzahl N von Anbaukomponenten an der Baustelle gelagert sind, wobei N > N > 2 ist, gemäß dem Oberbegriff des Anspruchs 1.

Die Erfindung betrifft weiter eine Anordnung zum Durchführen von Baumaßnahmen, insbesondere Tiefbaumaßnahmen, auf einer Baustelle mit einer Anzahl n von Baumaschinen, insbesondere Tiefbaumaschinen, an welchen Anbaukomponenten, insbesondere Bauwerkzeuge, lösbar und wechselnd angebracht sind, wobei ein Anzahl N von Anbaukomponenten an der Baustelle gelagert sind, wobei N > n > 2 ist, gemäß dem Oberbegriff des Anspruchs 8.

Beim Durchführen von Baumaßnahmen ist es häufig erforderlich, an einer Baumaschine, etwa einem Bohrgerät, im Verlauf der Bauarbeiten unterschiedliche Bauwerkzeuge anzubringen. So kann es beispielsweise bei einem Bohrgerät erforderlich sein, beim Erstellen eines Bohrloches für normalen Boden eine Bohrschnecke einzusetzen, welche einen effizienten und schnellen Bohrfortschritt bei normalen Bodenverhältnissen ermöglicht. Bei Änderung einer Bodenschicht, etwa bei Erreichen einer Gesteinsschicht, kann es erforderlich sein, die Bohrschnecke durch einen Felsbohrer oder bei Erreichen von Kiesschichten einen Kastenbohrer einzusetzen. Dabei ist es bekannt, dass die einzelnen Bauwerkzeuge mit einem Erkennungsmittel versehen sind, so dass sie automatisch durch die Maschine erkannt werden. Die Maschine kann dabei eine Erfassungseinrichtung, etwa eine Sende- und Empfangseinrichtung, aufweisen, mit welcher das Erkennungsmittel an dem angebauten Bauwerkzeug drahtgebunden oder üblicherweise drahtlos abgefragt wird. Der Maschinenfahrer kann so sicher erkennen, welches Bauwerkzeug aktuell angebracht ist. Allerdings sind nicht immer alle Bauwerkzeuge mit einem solchen Erkennungsmittel versehen oder dieses ist nicht funktionsfähig. Weiter kann insbesondere bei einer Abfrage per Funk eine eindeutige Ermittlung durch andere Bauwerkzeuge im Nahbereich beeinträchtigt sein.

Von einer Zentrale kann über die einzelne Baumaschine die Information abgerufen werden, welches Bauwerkzeug aktuell an einer Baumaschine im Einsatz ist. Diese Information ist für eine Arbeitsablaufplanung an der Baustelle wichtig, da diese benötigt wird, um festzustellen, welche Bauwerkzeuge noch zur Verfügung stehen und von anderen Baumaschinen an der Baustelle verwendet werden können.

Allerdings ist es für eine zuverlässige Arbeitsplanung nicht hinreichend, nur die Bauwerkzeuge zu kennen, welche aktuell an einer Baumaschine montiert sind. Denn für den Betrieb der Baumaschine zur Durchführung einer bestimmten Baumaßnahme sind durch eine Baumaschine auch grundsätzlich weitere Baumwerkzeuge belegt, welche zwar nicht aktuell an der Baumaschine montiert sind, sich jedoch im Nahbereich der Baumaschine befinden und in absehbarer Zeit für einen Werkzeugwechsel benötigt werden. So kann ein Satz von mehreren verschiedenen Bauwerkzeugen tatsächlich durch eine Baumaschine belegt sein.

Es ist bekannt, dass ein Baumaschinenfahrer einer Bauleitung mitteilt, welcher Satz von Bauwerkzeugen an der Baumaschine benötigt wird und somit tatsächlich nicht zur freien Verfügung steht, obwohl einzelne Bauwerkzeuge nicht an der Baumaschine montiert sind. Allerdings kann es bei dieser Meldung durch den Baumaschinenfahrer vorkommen, dass er die tatsächlich benötigten Bauwerkzeuge einer Bauleitung nicht, nicht vollständig oder nicht richtig meldet oder nach Abschluss einer Baumaßnahme ein Freiwerden einzelner Bauwerkzeuge versehentlich nicht oder falsch mitteilt. Hierdurch werden eine effiziente Bauleitung mit einer Arbeitsablaufsteuerung und eine effiziente Bevorratung notwendiger Bauwerkzeuge an einer Baustelle erschwert.

Die WO 2016/115499 A1 offenbart ein Verfahren und eine Anordnung zur Durchführung von Baumaßnahmen, wobei mehrere Baumaschinen und mehrere Anbaukomponenten zum Einsatz kommen. In bzw. an den Baumaschinen oder Anbaukomponenten sind Beschleunigungssensoren angebracht, mit denen Bewegungs- bzw. Vibrationsprofile ermittelt werden können, die zur Ermittlung der an der Baumaschine angebrachten Anbaukomponente dienen und mit deren Hilfe die Produktivität und Effizienz der durchgeführten Arbeitsschritte bewertet werden können.

Der Erfindung liegt die **Aufgabe** zugrunde, ein Verfahren und eine Anordnung anzugeben, mit welchen ein besonders effizientes Durchführen von Baumaßnahmen an einer Baustelle ermöglicht wird.

Die Aufgabe wird zum einen durch ein Verfahren mit den Merkmalen des Anspruchs 1 und zum anderen durch eine Anordnung mit den Merkmalen des Anspruchs 8 gelöst. Bevorzugte Ausführungsformen der Erfindung sind in den jeweils abhängigen Ansprüchen angegeben.

Das erfindungsgemäße Verfahren ist dadurch gekennzeichnet, dass in einer Rechnereinheit die Anzahl n und die Art der Baumaschinen und die Anzahl N und die Art der Anbaukomponenten abgespeichert werden, welche an einer Baustelle vorhanden sind, dass die Rechnereinheit mit den einzelnen Baumaschinen in Datenverbindung steht und Informationen zur Aktorik der einzelnen Baumaschinen abfragt, dass die Rechnereinheit abhängig von den erhaltenen Informationen ermittelt, welche Anbaukomponente an der einzelnen Baumaschine angebracht ist, und dass die Rechnereinheit ermittelt und angibt, welche Anbaukomponenten an der Baustelle zur freien Verfügung bereitstehen.

Ein Grundgedanke der Erfindung kann darin gesehen werden, ein Verfahren zur Verfügung zu stellen, bei welchem durch eine Rechnereinheit zuverlässig ein tatsächlich an einer Baumaschine montiertes Bauwerkzeug feststellbar ist. Dabei werden durch die Rechnereinheit Informationen der Aktorik der einzelnen Baumaschinen abgefragt, also etwa aus dem Antriebssystem, den Drehantrieben, der linearen Stellantriebe sowie zur Position von Komponenten der Baumaschine, etwa eines Mastes, eines Bohrdrehantriebes, eines Auslegers etc. Dabei ist die Rechnereinheit ausgebildet, anhand dieser Informationen zu bestimmen, welche Baumaßnahme von der Baumaschine durchgeführt wird und anhand von hinterlegten Informationen in einer Datenbank die Rechnereinheit feststellen kann, ob und welches Bauwerkzeug von der Baumaschine eingesetzt wird. Diese Information kann alleine oder in Verbindung mit weiteren Informationen zur Bestimmung des eingesetzten und angebrachten Bauwerkzeuges verwendet werden.Auf diese Weise kann durch die Rechnereinheit weitgehend automatisiert ermittelt werden, welche Bauwerkzeuge von einzelnen Baumaschinen tatsächlich eingesetzt werden. Durch Abgleich mit einem vorgegebenen Bestand an Bauwerkzeugen kann ermittelt werden, welche und wie viele Bauwerkzeuge an der Baustelle tatsächlich zur freien Verfügung stehen.

Hierdurch können an einer Baustelle Leerzeiten durch fehlende Bauwerkzeuge an Baumaschinen und auch ein übermäßiger Bestand an Bauwerkzeugen vermieden werden. Dies führt zu erheblichen Kosteneinsparungen.

Eine vorteilhafte Weiterbildung der Erfindung kann darin gesehen werden, dass die Rechnereinheit abhängig von den erhaltenen Informationen ermittelt, welcher Satz von Anbaukomponenten von der einzelnen Baumaschine benötigt wird. Dabei wird ein Verfahren zur Verfügung gestellt, bei welchem durch eine Rechnereinheit nicht nur ein tatsächlich an einer Baumaschine montiertes Bauwerkzeug feststellbar ist, sondern auch das oder die weiteren Bauwerkzeuge, welche von der jeweiligen Baumaschine zum Durchführen der Baumaßnahme zeitnah benötigt werden.

Grundsätzlich kann die aktuell an einer Baumaschine angebrachte Anbaukomponente auch von einem Maschinenfahrer von Hand in das Steuerungssystem eingegeben werden, so dass dieses von der Rechnereinheit abgefragt werden kann. Bevorzugt ist es nach einer Weiterbildung der Erfindung, dass jede Baumaschine eine Erfassungseinrichtung aufweist, mit welcher erfasst wird, welche Anbaukomponente an der Baumaschine angebracht ist und/oder welche sich in einem Nahbereich befindet. Die Erfassungseinrichtung kann dabei ein Kamerasystem oder eine Sende- und Empfangseinrichtung sein. Diese kann dabei vorzugsweise nur das unmittelbar an der Baumaschine angebrachte Werkzeug erfassen. Eine Erfassung ist jedoch auch von Bauwerkzeugen im Nahbereich der Maschine möglich, wobei jedoch in diesem Fall keine sichere und eindeutige Zuordnung möglich ist, ob ein Bauwerkzeug tatsächlich für die Baumaschine benötigt wird oder schon an der Baumaschine angebracht ist. Diese Information wird in Kombination mit den weiteren Informationen zur Aktorik zur zuverlässigen Bestimmung der benötigten und freien Bauwerkzeuge herangezogen. So kann die Rechnereinheit die Bestimmung anhand der Aktorikinformationen des angebrachten und eingesetzten Bauwerkzeuges durch die Zusatzinformation zum Bauwerkzeug überprüfen und verifizieren.

Besonders bevorzugt ist es, dass die Anbaukomponenten mit einem maschinenlesbaren Erkennungsmittel versehen werden. Ein maschinenlesbares Erkennungsmittel an einer Anbaukomponente kann beispielsweise ein RFID-Chip sein, welcher drahtlos abgefragt werden kann. Ein derartiges Erkennungsmittel erlaubt bei Empfang eines entsprechenden Abfragesignals ein unmittelbares Rücksenden eines Antwortsignals. In diesem Antwortsignal können die notwendigen Informationen zu der abgefragten Anbaukomponente enthalten sein. Grundsätzlich können auch andere Erkennungsmittel zum Einsatz kommen.

Eine weitere bevorzugte Ausführungsform der Erfindung besteht darin, dass in der Rechnereinheit zu jeder Baumaschine hinterlegt ist, welche Baumaßnahme mit welchem Satz von Anbaukomponenten durchgeführt wird und welche Information zur Aktorik der Baumaschine dabei zu erwarten ist. Beispielsweise bei der Erstellung eines Gründungspfahles durch ein Bohrgerät sind bestimmte Anbaukomponenten gleichzeitig oder abwechselnd erforderlich, etwa eine Kellystange, ein Bohrwerkzeug und beispielsweise auch ein Werkzeug zum Reinigen des Bohrlochgrundes. Diese müssen jeweils mit bestimmten Drehzahlen und Vorschubwerten betrieben werden.

Beispielsweise anhand der Stellung des Drehantriebes entlang eines Mastes kann ermittelt werden, wann welche Komponente, etwa ein Werkzeug zur Reinigung des Bohrlochgrundes, erforderlich ist. Dies kann von der Rechnereinheit, welche in einer Zentrale angeordnet sein kann, herangezogen werden, um eine Anbaukomponente freizugeben oder weiter für eine Baumaschine reserviert zu halten. Gegebenenfalls kann über die zentrale Rechnereinheit auch ein Beschaffungsvorgang für ein oder mehrere weitere Anbaukomponenten ausgelöst werden, welche an die Baustelle zu transportieren sind. Ebenso kann einer Bauleitung angezeigt werden, welche Anbaukomponenten für die weiteren Baumaßnahmen an einer Baustelle nicht mehr benötigt werden und von der Baustelle abgezogen werden können.

Eine weitere bevorzugte Verfahrensvariante besteht nach der Erfindung darin, dass mindestens eine Positionsbestimmungseinrichtung vorgesehen wird, mit welcher Positionen der Baumaschinen und/oder der Anbaukomponenten auf der Baustelle bestimmt und angegeben werden. Hierdurch kann eine genaue Ortsbestimmung der einzelnen Baumaschinen und der einzelnen Anbaukomponenten vorgenommen werden. So kann bei freien Bauwerkzeugen das geeignete Bauwerkzeug einer Baumaschine zugeordnet werden, die beide möglichst nahe beieinander sind. Auf diese Weise können Transportvorgänge innerhalb der Baustelle begrenzt gehalten werden, was die Effizienz der durchzuführenden Baumaßnahmen weiter erhöht.

Die Positionsbestimmungseinrichtung kann über ein GPS-System oder ein baustelleninternes Positionsbestimmungssystem erfolgen, wobei die einzelnen Maschinen und Komponenten mit entsprechenden Sende- und/oder Empfangseinrichtungen zur Abgabe/Empfang eines Positionssignals ausgestattet sein können.

Als Baumaschinen können grundsätzlich alle denkbaren Baumaschinen vorgesehen sein. Für Tiefbau können dies insbesondere Bohrgeräte, Greifer, Schlitzwandfräsen, Bagger, Kräne etc. vorgesehen sein. Hinsichtlich der Anbaukomponenten ist es dabei bevorzugt, ein Tiefbauwerkzeug, insbesondere eine Bohrschnecke, einen Felsbohrer, einen Bohreimer oder eine Pumpe oder ein Bohrwerkzeug vorzusehen. Grundsätzlich können auch andere Tiefbauwerkzeuge und andere Bauwerkzeuge vorgesehen sein.

Die erfindungsgemäße Anordnung zum Durchführen von Baumaßnahmen ist dadurch gekennzeichnet, dass eine Rechnereinheit vorgesehen ist, in welcher die Anzahl n und die Art der Baumaschinen und die Anzahl N und die Art der Anbaukomponenten abspeicherbar sind, welche an der Baustelle vorhanden sind, dass die Rechnereinheit mit den einzelnen Baumaschinen in Datenverbindung steht und zum Abfragen von Informationen zur Aktorik der einzelnen Baumaschinen ausgebildet ist, dass die Rechnereinheit ausgebildet ist, abhängig von den erhaltenen Informationen zu ermitteln, welche Anbaukomponente an der einzelnen Baumaschine angebracht ist, und dass durch die Rechnereinheit ermittelbar und angebbar ist, welche Anbaukomponenten an der Baustelle zur freien Verfügung bereitstehen.

Mit dieser Anordnung kann insbesondere das zuvor beschriebene Verfahren durchgeführt werden. Es können dabei die zuvor beschriebenen Vorteile erzielt werden.

Nach einer Weiterbildung der Erfindung ist es vorteilhaft, dass die Rechnereinheit ausgebildet ist, abhängig von den erhaltenen Informationen zu ermitteln, welcher Satz von Anbaukomponenten von der einzelnen Baumaschine benötigt wird. Durch die Rechnereinheit ist so nicht nur ein tatsächlich an einer Baumaschine montiertes Bauwerkzeug feststellbar, sondern auch das oder die weiteren Bauwerkzeuge, welche von der jeweiligen Baumaschine zum Durchführen der Baumaßnahme zeitnah benötigt werden. Dies vereinfacht und verbessert die Arbeitsplanung.

Besonders bevorzugt ist es dabei, dass jede Baumaschine eine Erfassungseinrichtung aufweist, mit welcher erfassbar ist, welche Anbaukomponente an der Baumaschine angebracht ist und/oder welche sich in einem Nahbereich befindet. Die Erfassungseinrichtung kann insbesondere eine Sende- und Empfangseinrichtung zum drahtlosen Abfragen der Anbaukomponenten sein. Durch die so erhaltene Zusatzinformation kann die Ermittlung des angebrachten Bauwerkzeuges verifiziert werden.

Nach einer Weiterbildung der Erfindung ist es dabei bevorzugt, dass jede Anbaukomponente mit einem maschinenlesbaren Erkennungsmittel versehen ist. Das Erkennungsmittel kann dabei insbesondere ein RFID-Chip sein, welcher an einer geeigneten Position der Anbaukomponente angebracht ist.

Durch die Verknüpfung von mehreren Sensorinformationen auf unterschiedlichen Anbaugeräten und den Vergleich der Aktivität, etwa Drehung, Beschleunigung oder Neigung, kann die Maschine aus den Sensorinformationen darauf schließen, welches Anbaugerät mit welcher anderen Komponente verbunden ist und welche an dem Gerät schließlich verbunden ist. Hierzu vergleicht die Maschine die Bewegungsinformationen dieser Sensoriken mit der Aktorikinformation aus der Maschine.

Nach Einbau einer Kellystange und des Bohrwerkzeuges etwa dreht die Maschine ihre Anbaukomponente mit einer spezifischen Geschwindigkeit. Über den Abgleich der Drehraten aller in Frage kommenden Komponenten detektiert die Maschine schließlich ihre verbauten Komponenten und sperrt diese Komponenten schließlich für den Zugang von anderen Maschinen.

Über die Rotationslage oder Ausrichtung einer Anbaukomponente, etwa eines Kastenbohrers (stehen, liegen), kann die Maschine bereits unterscheiden, welches Werkzeug für den Anbau überhaupt in Frage kommt.

Eine Grundidee der Erfindung erschöpft sich nicht darin zu erkennen, welches Bauwerkzeug verbaut wird. Sondern anhand der verbauten bzw. gekoppelten Bauteile/Anbaukomponenten kann erkannt werden, welche Bauteile noch verfügbar sind.

Dies ist wichtig für den Bauablauf, da dadurch die Werkzeuge effizienter genutzt werden können. Damit können auch die Werkzeuge nachverfolgt werden.

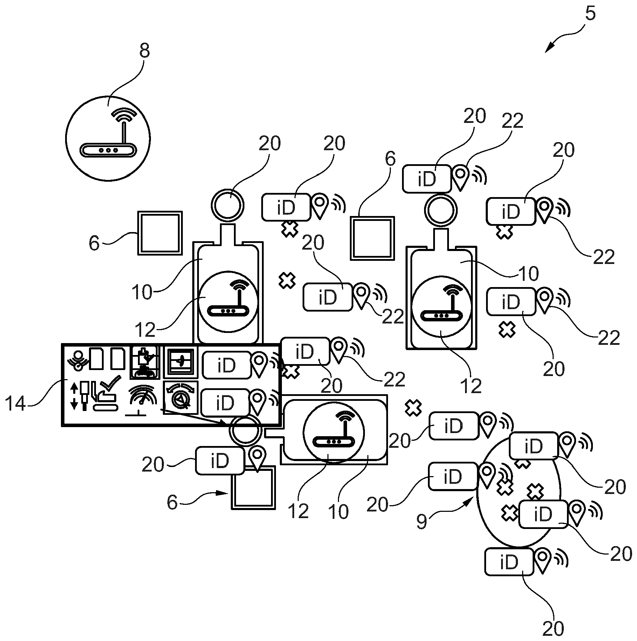

Die Erfindung wird nachfolgend anhand eines bevorzugten Ausführungsbeispieles näher erläutert. Die einzige Figur zeigt eine schematische Draufsicht auf eine Baustelle mit mehreren Baumaschinen und Anbaukomponenten.

In der einzigen Figur ist schematisch eine Baustelle 5 mit einer erfindungsgemäßen Anordnung zum Durchführen von Baumaßnahmen dargestellt. Beispielhaft sind drei Baumaschinen 10 vorgesehen, welche jeweils mit einer Erfassungseinrichtung 12 zum Erfassen von Anbaukomponenten 20 ausgerüstet sind. Die Anbaukomponenten 20 sind insbesondere Bauwerkzeuge, welche mit einem Erkennungsmittel 22 versehen sind. Das Erkennungsmittel 22 kann insbesondere ein RFID-Chip sein, welcher per Funk über die Erfassungseinrichtungen 12 der Baumaschinen 10 abgefragt werden kann.

Die Erfassungseinrichtung 12 kann dabei Teil einer Steuereinheit der jeweiligen Baumaschine 10 sein, wobei die Steuereinheit ebenfalls drahtlos mit einer zentralen Rechnereinheit 8 in Datenverbindung steht.

An jeder Baumaschine 10 ist zumindest eine Anbaukomponente 20 angebaut, um beispielsweise eine bestimmte Baumaßnahme oder einen bestimmten Bauarbeitsschritt durchzuführen. Weiterhin sind weitere Anbaukomponenten 20 an einem Entleerort 6 oder im Nahbereich zur Baumaschine 10 gelagert. Diese nicht unmittelbar verbauten Anbaukomponenten 20 sind für ein schnelles Einwechseln an einer bestimmten Baumaschine 10 vorgesehen, um eine Baumaßnahme durchzuführen, für die eine bestimmte Abfolge von Arbeitsschritten mit verschiedenen Bauwerkzeugen oder Anbaukomponenten 20 vorgesehen ist. Die Rechnereinheit 8 steht mit den einzelnen Baumaschinen 10 in Datenverbindung, wobei Informationen zur Aktorik der einzelnen Baumaschinen 10 abgefragt werden. Die Rechnereinheit 8 ermittelt abhängig von den erhaltenen Informationen, welche Anbaukomponente 20 an der einzelnen Baumaschine 10 angebracht ist. Diese Daten können mit den Daten der Erfassungseinrichtung verglichen und überprüft werden. Hierdurch kann auch ermittelt werden, welche Anbaukomponenten 20 sich im Nahbereich befinden, aber nicht an der Baumaschine 10 angebracht sind.

Weiterhin können an einem Werkzeuglager 9 weitere freie Anbaukomponenten 20 vorgesehen sein, welche grundsätzlich zur freien Verfügung stehen.

In der zentralen Rechnereinheit 8 sind alle Anbaukomponenten 20 auf der Baustelle 5 mit einer Anzahl N aufgelistet. Ebenso ist eine Anzahl n der Baumaschinen 10 auf der Baustelle 5 in der zentralen Rechnereinheit 8 gespeichert. Durch Abfragen der Aktorikinformationen und der Erfassungseinrichtungen 20 über die zugehörigen Steuereinheiten jeder Baumaschine 10 kann durch die zentrale Rechnereinheit 8 bestimmt werden, welche konkrete Anbaukomponente 20 an einer Baumaschine 10 verbaut ist. Vorzugsweise kann durch die Rechnereinheit 8 auch weiterhin ermittelt werden, welche weiteren Anbaukomponenten 20 sich in einem Nahbereich zu jeder Baumaschine 10 befinden. Aufgrund einer nahen Anordnung der einzelnen Baumaschinen 10 zueinander ist eine derartige Information grundsätzlich jedoch nicht ausreichend, um sicher festzustellen, welche Anbaukomponente 20 im Nahbereich einer Baumaschine 10 dieser zugeordnet und von dieser auch in nächster Zeit benötigt wird oder gegebenenfalls schon an der Baumaschine 10 angebracht ist.

In der Rechnereinheit 8 sind zu den einzelnen Baumaßnahmen die benötigten Bauwerkzeuge beziehungsweise Anbaukomponenten 20 und deren Abfolge sowie typische Daten zur Aktorik beim Einsatz einer entsprechenden Anbaukomponente 20 an einer Baumaschine 10 hinterlegt. Hierdurch kann durch die zentrale Rechnereinheit 8 ermittelt oder verifiziert werden, welche Anbaukomponente 20 im Einsatz ist und welche nicht an einer Baumaschine 10 angebrachte Anbaukomponente 20 in nächster Zeit von einer Baumaschine 10 benötigt wird und somit für diese Baumaschine reserviert ist und nicht zur freien Verfügung steht. Durch Abgleich mit der Liste der insgesamt vorhandenen Anbaukomponenten 20 kann so durch die Rechnereinheit 8 bestimmt werden, welche Anbaukomponenten 20 auf der Baustelle tatsächlich zur freien Verfügung stehen. Dies kann bei der Arbeitsplanung durch die Bauleitung berücksichtigt oder bei der Beschaffung oder Freigabe von Anbaukomponenten 20 genutzt werden.

Über eine Maschinensteuerung 14 an den Baumaschinen 10 können an die zentrale Rechnereinheit 8 drahtlos Informationen zur Aktorik der Baumaschine 10, also zu einem vertikalen Vorschub, zu Stellpositionen von Stellzylindern und Antreiben, zur Drehzahl sowie weitere Informationen über Sensoren der Maschine abgefragt werden. Unter dem Begriff Aktorik sind im Sinne der Erfindung verstellbare und/oder bewegbare Komponenten der Baumaschine 10 zu verstehen, welche zur Durchführung einer Baumaßnahme mit einer Anbaukomponente 20 aktiviert werden.

Zusätzlich kann über die zentrale Rechnereinheit 8 auch über eine nicht-dargestellte Erfassungseinrichtung an dem Werkzeuglager 9 die Anzahl und Art der dort gelagerten und grundsätzlich frei zur Verfügung stehenden Anbaukomponenten 20 erfasst werden. Durch die zentrale Rechnereinheit 8 kann vorzugsweise der aktuelle Betrieb von jeder Baumaschine 10 ermittelt und der Bedarf an konkreten Anbaukomponenten 20 zeitnah oder sogar in Echtzeit bestimmt werden. Hierdurch können Anbaukomponenten 20 im Werkzeuglager 9 reserviert oder auch andere Anbaukomponenten 20 an der Baustelle 5 freigegeben werden.

Weiterhin können die Baumaschinen 10 und die Anbaukomponenten 20 mit einer Positionsbestimmungseinrichtung versehen sein, so dass deren konkrete Lage auf einer Baustelle bestimmt werden kann. Die Lage kann dann auf einem Bildschirm an der zentralen Rechnereinheit 8 oder in jeder Baumaschine 10 als ein Lageplan dargestellt werden, was beispielsweise in der Figur gezeigt ist.

## Patentansprüche

1. Verfahren zum Durchführen von Baumaßnahmen, insbesondere Tiefbaumaßnahmen, auf einer Baustelle (5) mit einer Anzahl n von Baumaschinen (10), insbesondere Tiefbaumaschinen,
an welchen Anbaukomponenten (20), insbesondere Bauwerkzeuge, lösbar und wechselnd angebracht werden, wobei eine Anzahl N von Anbaukomponenten (20) an der Baustelle (5) gelagert sind, wobei N > n > 2 ist,
**dadurch gekennzeichnet,**
**dass** in einer Rechnereinheit (8) die Anzahl n und die Art der Baumaschinen (10) und die Anzahl N und die Art der Anbaukomponenten (20) abgespeichert werden, welche an einer Baustelle (5) vorhanden sind,
**dass** die Rechnereinheit (8) mit den einzelnen Baumaschinen (10) in Datenverbindung steht und Informationen zur Aktorik der einzelnen Baumaschinen (10) abfragt,
**dass** die Rechnereinheit (8) abhängig von den erhaltenen Informationen zur Aktorik ermittelt, welche Anbaukomponente (20) an der einzelnen Baumaschine (10) angebracht ist, und
**dass** die Rechnereinheit (8) ermittelt und angibt, welche Anbaukomponenten (20) an der Baustelle (5) zur freien Verfügung bereitstehen.

2. Verfahren nach Anspruch 1,
**dadurch gekennzeichnet,**
**dass** die Rechnereinheit (8) abhängig von den erhaltenen Informationen zur Aktorik ermittelt, welcher Satz von Anbaukomponenten (20) von der einzelnen Baumaschine (10) zum Durchführen der Baumaßnahme zeitnah benötigt wird.

3. Verfahren nach Anspruch 1 oder 2,
**dadurch gekennzeichnet,**
**dass** jede Baumaschine (10) eine Erfassungseinrichtung (12) aufweist, mit welcher erfasst wird, welche Anbaukomponente (20) an der Baumaschine (10) angebracht ist, und/oder welche sich in einem Nahbereich befindet.

4. Verfahren nach einem der Ansprüche 1 bis 3,
**dadurch gekennzeichnet,**
**dass** die Anbaukomponenten (20) mit einem maschinenlesbaren Erkennungsmittel (22) versehen werden.

5. Verfahren nach einem der Ansprüche 2 bis 4,
**dadurch gekennzeichnet,**
**dass** in der Rechnereinheit (8) zu jeder Baumaschine (10) hinterlegt ist, welche Baumaßnahme mit welchem Satz von Anbaukomponenten (20) durchgeführt werden und welche Information zur Aktorik der Baumaschine (10) dabei zu erwarten ist.

6. Verfahren nach einem der Ansprüche 1 bis 5,
**dadurch gekennzeichnet,**
**dass** mindestens eine Positionsbestimmungseinrichtung vorgesehen wird, mit welcher Positionen der Baumaschinen (10) und/oder der Anbaukomponenten (20) auf der Baustelle (5) bestimmt und angegeben werden.

7. Verfahren nach einem der Ansprüche 1 bis 6,
**dadurch gekennzeichnet,**
**dass** als Anbaukomponente (20) ein Tiefbauwerkzeug, insbesondere eine Bohrschnecke, ein Felsbohrer, ein Bohreimer oder eine Pumpe, oder ein Bohrgestänge vorgesehen werden.

8. Anordnung zum Durchführen von Baumaßnahmen, insbesondere Tiefbaumaßnahmen, auf einer Baustelle (5) mit einer Anzahl n von Baumaschinen (10), insbesondere Tiefbaumaschinen, an welchen Anbaukomponenten (20), insbesondere Bauwerkzeuge, lösbar und wechselnd angebracht sind, wobei eine Anzahl N von Anbaukomponenten (20) an der Baustelle (5) gelagert sind, wobei N > n > 2 ist, insbesondere zur Durchführung eines Verfahrens nach einem der Ansprüche 1 bis 7,
**dadurch gekennzeichnet,**
**dass** eine Rechnereinheit (8) vorgesehen ist, in welcher die Anzahl n und die Art der Baumaschinen (10) und die Anzahl N und die Art der Anbaukomponenten (20) abspeicherbar sind, welche an der Baustelle (5) vorhanden sind,
**dass** die Rechnereinheit (8) mit den einzelnen Baumaschinen (10) in Datenverbindung steht und zum Abfragen von Informationen zur Aktorik der einzelnen Baumaschine (10) ausgebildet ist,
**dass** die Rechnereinheit (8) ausgebildet ist, abhängig von den erhaltenen Informationen zur Aktorik zu ermitteln, welche Anbaukomponente (20) an der einzelnen Baumaschine (10) angebracht ist, und
**dass** durch die Rechnereinheit (8) ermittelbar und angebbar ist, welche Anbaukomponenten (20) an der Baustelle (5) zur freien Verfügung bereitstehen.

9. Anordnung nach Anspruch 8,
**dadurch gekennzeichnet,**
**dass** die Rechnereinheit (8) ausgebildet ist, abhängig von den erhaltenen Informationen zur Aktorik zu ermitteln, welcher Satz von Anbaukomponenten (20) von der einzelnen Baumaschine (10) zum Durchführen der Baumaßnahme zeitnah benötigt wird.

10. Anordnung nach Anspruch 8 oder 9,
**dadurch gekennzeichnet,**
**dass** jede Baumaschine (10) eine Erfassungseinrichtung (12) aufweist, mit welcher erfassbar ist, welche Anbaukomponente (20) an der Baumaschine (10) angebracht ist, und/oder welche sich in einem Nahbereich befindet.

11. Anordnung nach einem der Ansprüche 8 bis 10,
**dadurch gekennzeichnet,**
**dass** jede Anbaukomponente (20) mit einem maschinenlesbaren Erkennungsmittel (22) versehen ist.

## Claims

1. Method for carrying out construction measures, in particular foundation engineering measures, on a construction site (5) with a number n of construction machines (10), in particular foundation engineering machines,
on which attachment components (20), in particular construction tools, are fixed in a releasable and changing manner, wherein a number N of attachment components (20) are kept on the construction site (5), wherein N > n > 2,
**characterized in that**
in a computer unit (8) the number n and the type of construction machines (10) and the number N and the type of attachment components (20) present on a construction site (5) are saved,
**in that** the computer unit (8) has a data connection to the individual construction machines (10) and queries information on the actuators of the individual construction machines (10),
**in that** depending on the information received on the actuators the computer unit (8) ascertains which attachment component (20) is fixed on the individual construction machine (10), and
**in that** the computer unit (8) ascertains and indicates which attachment components (20) are freely available on the construction site (5).

2. Method according to claim 1,
**characterized in that**
depending on the information received on the actuators the computer unit (8) ascertains which set of attachment components (20) is timely required by the individual construction machine (10) to carry out the construction measure.

3. Method according to claim 1 or 2,
**characterized in that**
each construction machine (10) has a detection means (12), with which detection is made as to which attachment component (20) is fixed on the construction machine (10) and/or which one is located in close range.

4. Method according to any one of claims 1 to 3,
**characterized in that**
the attachment components (20) are provided with a machine-readable recognition instrument (22).

5. Method according to any one of claims 2 to 4,
**characterized in that**
in the computer unit (8) storage is made for each construction machine (10) as to which construction measure is carried out with which set of attachment components (20) and which information on the actuators of the construction machine (10) is to be expected thereby.

6. Method according to any one of claims 1 to 5,
**characterized in that**
at least one position determination means is provided, with which positions of the construction machines (10) and/or of the attachment components (20) on the construction site (5) are determined and indicated.

7. Method according to any one of claims 1 to 6,
**characterized in that**
as attachment component (20) a foundation engineering tool, in particular an auger, a rock drill, a drilling bucket or a pump, or a drill rod are provided.

8. Arrangement for carrying out construction measures, in particular foundation engineering measures, on a construction site (5) with a number n of construction machines (10), in particular foundation engineering machines, on which attachment components (20), in particular construction tools, are fixed in a releasable and changing manner, wherein a number N of attachment components (20) are kept on the construction site (5), wherein N > n > 2, in particular for carrying out a method according to any one of claims 1 to 7,
**characterized in that**
a computer unit (8) is provided, in which the number n and the type of construction machines (10) and the number N and the type of attachment components (20) present on the construction site (5) can be saved,
**in that** the computer unit (8) has a data connection to the individual construction machines (10) and is designed to query information on the actuators of the individual construction machine (10),
**in that** depending on the information received on the actuators the computer unit (8) is designed to ascertain which attachment component (20) is fixed on the individual construction machine (10), and
**in that** it can be ascertained and indicated by the computer unit (8) which attachment components (20) are freely available on the construction site (5).

9. Arrangement according to claim 8,
**characterized in that**
depending on the information received on the actuators the computer unit (8) is designed to ascertain which set of attachment components (20) is timely required by the individual construction machine (10) to carry out the construction measure.

10. Arrangement according to claim 8 or 9,
**characterized in that**
each construction machine (10) has a detection means (12), with which detection can be made as to which attachment component (20) is fixed on the construction machine (10) and/or which one is located in close range.

11. Arrangement according to any one of claims 8 to 10,
**characterized in that**
each attachment component (20) is provided with a machine-readable recognition instrument (22).

## Revendications

1. Procédé de réalisation de mesures de construction, en particulier de mesures de génie civil sur un chantier (5) avec un nombre n de machines de chantier (10), en particulier de machines de génie civil,
au niveau desquelles des composants rapportés (20), en particulier des outils de construction, sont montés de manière amovible et changeante, dans lequel un nombre N de composants rapportés (20) est entreposé au niveau du chantier (5), avec N > n > 2,
**caractérisé en ce**
**que** l'on enregistre dans une unité de calcul (8)le nombre n et le type de machines de chantier (10) et le nombre N et le type de composants rapportés (20), lesquels sont présents au niveau d'un chantier (5),
**que** l'unité de calcul (8) est en liaison de données avec les machines de chantier (10) individuelles et demande des informations sur les actionneurs des machines de chantier (10) individuelles,
**que** l'unité de calcul (8) détermine en fonction des informations reçues sur les actionneurs quel composant rapporté (20) est monté au niveau de la machine de chantier (10) individuelle, et
**que** l'unité de calcul (8) détermine et indique quels composants rapportés (20) sont prêts pour la libre disposition au niveau du chantier (5).

2. Procédé selon la revendication 1,
**caractérisé en ce que** l'unité de calcul (8) détermine, en fonction des informations reçues sur les actionneurs, quel jeu de composants rapportés (20) de la machine de chantier (10) individuelle est rapidement nécessaire pour la réalisation de la mesure de construction.

3. Procédé selon la revendication 1 ou 2,
**caractérisé en ce que** chaque machine de chantier (10) présente un dispositif de détection (12), avec lequel il est détecté quel composant rapporté (20) est monté au niveau de la machine de chantier (10), et/ou lequel se trouve dans une zone proche.

4. Procédé selon l'une quelconque des revendications 1 à 3,
**caractérisé en ce que** les composants rapportés (20) sont pourvus d'un moyen de reconnaissance (22) lisible par machine.

5. Procédé selon l'une quelconque des revendications 2 à 4,
**caractérisé en ce que** dans l'unité de calcul (8) pour chaque machine de chantier (10), il est enregistré quelle mesure de construction est réalisée avec quel jeu de composants rapportés (20) et quelles informations sur les actionneurs de la machine de chantier (10) sont à attendre.

6. Procédé selon l'une quelconque des revendications 1 à 5,
**caractérisé en ce qu'**au moins un dispositif de détermination de position est prévu, avec lequel des positions des machines de chantier (10) et/ou des composants rapportés (20) sont déterminées et indiquées sur le chantier (5).

7. Procédé selon l'une quelconque des revendications 1 à 6,
**caractérisé en ce qu'**un outil de génie civil, en particulier une vis sans fin de forage, une perceuse à roche, un godet de forage ou une pompe ou une tringlerie de forage est prévu(e) comme composant rapporté (20).

8. Agencement de réalisation de mesures de construction, en particulier de mesures de génie civil, sur un chantier (5) avec un nombre n de machines de chantier (10), en particulier machines de génie civil, au niveau desquelles des composants rapportés (20), en particulier des outils de construction, sont montés de manière amovible et changeante, dans lequel un nombre N de composants rapportés (20) est entreposé au niveau du chantier (5), avec N > n > 2,
en particulier pour la réalisation d'un procédé selon l'une quelconque des revendications 1 à 7,
**caractérisé en ce qu'**une unité de calcul (8) est prévue, dans laquelle le nombre n et le type de machines de chantier (10) et le nombre N et le type de composants rapportés (20) peuvent être enregistrés, lesquels sont présents au niveau du chantier (5),
que l'unité de calcul (8) est en liaison de données avec les machines de chantier (10) individuelles et est réalisée pour demander des informations sur les actionneurs de la machine de chantier (10) individuelle,
que l'unité de calcul (8) est réalisée afin de déterminer, en fonction des informations reçues sur les actionneurs, quel composant rapporté (20) est monté au niveau de la machine de chantier (10) individuelle, et
qu'il peut être déterminé et indiqué par l'unité de calcul (8) quels composants rapportés (20) sont prêts pour la libre disposition au niveau du chantier (5).

9. Agencement selon la revendication 8,
**caractérisé en ce que** l'unité de calcul (8) est réalisée afin de déterminer, en fonction des informations reçues sur les actionneurs, quel ensemble de composants rapportés (20) de la machine de chantier (10) individuelle est rapidement nécessaire pour la réalisation de la mesure de construction.

10. Agencement selon la revendication 8 ou 9,
**caractérisé en ce que** chaque machine de chantier (10) présente un dispositif de détection (12), avec lequel il peut être détecté quel composant rapporté (20) est monté au niveau du chantier (10), et/ou lequel se trouve dans une zone proche.

11. Agencement selon l'une quelconque des revendications 8 à 10,
**caractérisé en ce que** chaque composant rapporté (20) est pourvu d'un moyen de reconnaissance (22) lisible par machine.
